# EUROPEAN PATENT APPLICATION

(11) **EP 2 554 978 A1**
(43) Date of publication of application: **06.02.2013**
(21) Application number: 11763119.2
(22) Date of filing: 18.03.2011
(51) Int. Cl.: G01N 21/956, G06K 9/00

(54) **METHOD FOR POSITIONING AND DETECTING AN INVISIBLE MARK AND DETECTOR FOR IMPLEMENTING SAME**

(30) Priority: 29.03.2010 RU 2010111640
(71) Applicant: Nizienko, Yuri Konstantinovich, Moskovskaya obl., 142190 (RU)
(72) Inventor: Nizienko, Yuri Konstantinovich, Moskovskaya obl., 142190 (RU)
(74) Representative: Storz, Ulrich
(86) International application number: PCT/RU2011/000171
(87) International publication number: WO 2011/122989

(57) **Abstract**

This detection method is performed in the following manner. Article 3 is placed and secured on positioning tool (PT) 4 so as to ensure that center 5 of the surface in question (SIQ), 2, lines up with optical axis 6 of the viewing tool. PT 4 is secured in the axial direction relative to optical system (OS) 8. The backlighting of SIQ 2 by light beam 9 from source 10 is arranged. During the last step, the user views and observes mark 1 in the reflected light beams, 11, by means of adjusting the viewing tool (for example, eyepiece 12) of OS 8. A self-centering clamping device with two reciprocally moving jaws, 14 and 15, that have retaining surfaces, 16 and 17, and seating surfaces, 18 and 19, respectively, is used as PT 4. Over the course of positioning, surface 2 of article 3 bearing mark 1 is placed in the plane of seating surfaces 18 and 19 of the clamping device's jaws 14 and 15. The distance from the center of SIQ 2 of article 3 to focal point F of eyepiece 12 ensures a constant value for a predetermined range of standard sizes of the articles, 3, undergoing detection. To this end, the mutual spatial immobilization of PT 4 and OS 8 in the axial plane is accomplished in the same position for which the one-time adjustment of the eyepiece is also ensured. The following are distinctive features of the positioning method. Before article 3 is placed and secured on PT 4, the article 3 surface bearing mark 1 is lined up with independent reference plane 20. Seating surfaces 18 and 19 of jaws 14 and 15 in the separated position are then brought into contact with plane 20, thereby ensuring the capture of article 3 by retaining surfaces 16 and 17, and it is secured. Thereafter, PT 4 and OS 8 are secured in the predetermined position. This detector is envisioned for the implementation of the methods. 3 independent claims (i.c.), 5 illustration (il.)

## Description

These inventions fall into the field of the detection of identification marks created on the surfaces of valuable articles for the purpose of determining their authenticity and can primarily be used to determine the authenticity of articles made from semiprecious and precious stones, for example, diamonds.

A wide array of technologies has recently been developed in world practice for creating safety (identification) marks that are invisible to the naked eye (and that consequently do not diminish the quality characteristics of valuable articles, for example, diamonds) on the surfaces of semiprecious and precious stones (such as diamonds) for the purpose of determining their authenticity by means of viewing an image of these marks over the course of detection [see, for example, Russian (RU) patents No. 2373307 and No. 2215659 C2, United States (US) No. 6391215, etc.]. In this regard, the need arises for the development of portable detectors for viewing the aforementioned marks that are easy to use, ensure high viewing quality for a wide variety of standard article sizes, and are available to a broad range of users.

A method for detecting an identification mark that is invisible to the naked eye on the surface of a valuable article is known from the prior art, according to which the following are carried out: placing and securing the article on the positioning tool so as to ensure that the center of this article's surface of interest (the image of the identification mark) lines up with the optical axis of the viewing tool that is used for detection within the makeup of the optical system; securing the positioning tool in the axial direction relative to the optical system; backlighting the article's surface of interest with a directed light beam from an independent emission source, and; user viewing and observation of the mark in the reflected light beams while adjusting the optical system's viewing tool (RU Patent No. 2 215 659 C2).

A method for positioning a valuable article bearing an identification mark over the course of its detection is known from the prior art, which consists of the fact that the article is placed and secured on the positioning tool so as to ensure the possibility that the center of this article's surface of interest (the image of the identification mark) lines up with the optical axis of the viewing tool that is used for detection within the makeup of the optical system, after which the axial position of the optical system is fixed relative to the positioning tool (RU Patent No. 2 215 659 C2).

A detector for recording an identification mark that is invisible to the naked eye on the surface of a valuable article is known from the prior art, which includes a positioning tool and an optical system housed in a casing that are secured in the axial direction, during which the optical system contains, at a minimum, a viewing tool and a backlighting tool in the form of an independent directed emission source that are structurally and technologically arranged so as to ensure the possibility of the backlighting of the article's surface in the area of the identification mark and its visual observation by the user through the viewing tool in the reflected light (RU Patent No. 2 215 659 C2).

The following can be regarded as shortcomings of these known engineering solutions.

Regarding the "method" subject matter of the invention: the necessity of the individual adjustment of the viewing tool for each specific standard size of the article undergoing detection in order to ensure the requisite quality (sharpness and contrast) of the visual perception of the mark by the user, which complicates the detection process and limits its functional capabilities due to the narrowing of the range of standard article sizes for which the requisite viewing quality is ensured by the viewing tool specifically used.

Regarding the "device" subject matter of the invention: the limitation of functional capabilities due to the narrowing of the range of standard article sizes for which the requisite viewing quality is ensured by the viewing tool specifically used.

This is explained by the fact that the distance from the center of the surface of interest (the center of the mark image) to the focal point of the viewing tool changes for each specific standard size of the article undergoing detection in the known engineering solutions, which requires the readjustment of the viewing tool, the adjustment range of which is functionally limited.

The claimed engineering solutions were based on the objective of the expansion functional and technological capabilities while simplifying the design and adjustment process, as well as ensuring the high quality of the viewed image for a wide range of standard sizes of the articles undergoing detection.

Thus, the technical result to be achieved by virtue of the claimed engineering solutions consists of enhancing the quality (the contrast) of the image of the marks undergoing detection for a wide range of standard article sizes while simplifying the article positioning process, as well as ensuring the high-quality (sharp and contrastive) viewing of the mark image on articles that have different standard sizes, accompanied by one-time optical system adjustment.

The specified technical result is ensured by virtue of the fact that, **according to the invention**, in this method for detecting an identification mark that is invisible to the naked eye on the surface of a valuable article, according to which the following are carried out: placing and securing the article on the positioning tool so as to ensure that the center of this article's surface of interest lines up with the optical axis of the viewing tool that is used for detection within the makeup of the optical system; securing the positioning tool in the axial direction relative to the optical system; backlighting the article's surface of interest with a directed light beam from an independent emission source, and; user viewing and observation of the mark in the reflected light beams while adjusting the optical system's viewing tool, a self-centering clamping device with two reciprocally moving jaws is used as the positioning tool, which has retaining and seating surfaces; over the course of positioning, the surface of the valuable article bearing the identification mark is placed in the plane of the seating surfaces of the clamping device's jaws, and; in this instance, the distance from the center of the article's surface of interest to the focal point of the viewing tool ensures a constant value for a predetermined range of standard sizes of the articles undergoing detection, to which end the mutual spatial immobilization of the positioning tool and the optical system in the axial direction is accomplished in the same spatial position for which the adjustment of the viewing tool is also accomplished.

The specified technical result is also ensured by virtue of the fact that, **according to the invention**, in the method for positioning a valuable article bearing an identification mark over the course of its detection, which consists of the fact that the article is placed and secured on the positioning tool in such a way as to make it possible to ensure that the center of this article's surface of interest lines up with the optical axis of the viewing tool that is used for detection within the makeup of the optical system, after which the axial position of the optical system is fixed relative to the positioning tool, before the article is placed and secured on the positioning tool, in the capacity of which a self-centering clamping device with two reciprocally moving jaws with retaining and seating surfaces is used, the article surface bearing the identification mark is lined up with an independent reference plane; the seating surfaces of the clamping device's jaws in the separated position are then brought into contact with the aforementioned reference plane so as to ensure the capture of the article undergoing detection by the retaining surfaces of the jaws and to accomplish its immobilization, resulting in the formation of contact areas in the locations where the article engages with the retaining surfaces, after which the mutual spatial immobilization of the positioning tool and the optical system in the axial direction is accomplished in such a way that the distance from the area's surface in question to the focal point of the viewing tool constitutes a constant value for a predetermined range of standard sizes of the articles undergoing detection, to which end the mutual spatial immobilization of the positioning tool and the optical system in the axial direction is always accomplished in the same position.

The specified technical result is also ensured by virtue of the fact that, **according to the invention**, in the detector for recording an identification mark that is invisible to the naked eye on the surface of a valuable article, which includes a positioning tool and an optical system housed in a casing that are secured in the axial direction, during which the optical system contains, at a minimum, a viewing tool and a backlighting tool in the form of an independent directed emission source that are structurally and technologically arranged so as to ensure the possibility of the backlighting of the article's surface in the area of the identification mark and its visual observation by the user through the viewing tool in the reflected light, the positioning tool is fashioned in the form of a self-centering clamping device with two reciprocally moving jaws, each of which has one seating surface and two retaining surfaces, the latter of which are oriented along the longitudinal axis of the detector at angle to one another, resulting in the formation of a symmetrical groove with a triangular shape, during which the axes of symmetry of the grooves of the opposing jaws lie in the same plane as the longitudinal axis of the detector; the geometric parameters of the aforementioned grooves are selected based on the condition of ensuring the possibility the article's capture along the perimeter of the retaining surfaces of the jaws, resulting in the formation of contact areas; here, the mutual axial immobilization of the optical system's casing and the positioning tool is arranged so as to make it possible to ensure the constancy of the distance value from the viewing tool's focal point to the aforementioned seating surfaces of the clamping device that spatially coincide with the plane of the position of the article surfaces in question of a predetermined range of standard sizes following their immobilization for detection.

It is advisable to apply a resilient, preferably light-absorbing coating such as teflon, silicone, or rubber to the retaining surfaces of the clamping device's jaws.

The viewing tool may be mounted in such a way that its optical axis coincides with the axis of symmetry of the detector, which is functionally also the axis of symmetry of the clamping device, during which the optical system has a translucent plate that is installed at an angle to the aforementioned optical axis, while the backlighting tool must be spatially oriented so as to make the generation of a light beam possible, the axis of symmetry of which, following reflection from the aforementioned plate, coincides with the optical axis of the viewing tool.

The viewing tool may also be mounted in such a way that its optical axis is located at a calculated angle to the axis of symmetry of the detector, which is functionally also the axis of symmetry of the clamping device, during which the backlighting tool is spatially oriented so as to make the generation of a light beam possible, the axis of symmetry of which relative to the aforementioned axis of the detector is located in the same plane and at the same angle as the optical axis of the viewing tool, but mirror symmetrically.

The detector package may have an independent plate, i.e., one that is not kinematically connected to the detector, which has a reference plane that functionally constitutes a tool for positioning the seating surfaces of the jaws in the same reference plane as the article surface to which the identification mark has been applied.

An analysis of the prior art conducted by the applicant, including a search for patent and scientific-and-technical information sources, as well as the identification of sources containing details about analogs of the claimed inventions, made it possible to establish that no analogs exist that are characterized by attributes and relationships between them identical or equivalent to all the substantive attributes of the claimed engineering solutions, while the prototype selected from the analogs found as being the closest analog as far as the complement of attributes made it possible to identify the complement of substantive distinctive attributes (with respect to the technical result specified by the applicant) in the claimed items described in the patent claims.

Consequently, the claimed engineering solutions satisfy the requirement of the "novelty" patentability condition according to prevailing laws.

In order to verify that the claimed inventions satisfy the requirement of the "inventive level" patentability condition, the applicant conducted a search of known engineering solutions for the purpose of identifying attributes coinciding with those of the claimed engineering solutions that are different from the prototype, the results of which reveal that the claimed inventions do not obviously ensue from the known prior art for a specialist, since an effect of the transformations envisioned by the substantive attributes of the claimed inventions on achievement of the technical result specified by the applicant is not revealed from the prior art identified by the applicant.

In particular, the claimed inventions do not envision the following transformations of the known prototype items:
- the augmentation of a known item by any known attribute that is tied to it by known rules in order to achieve a technical result with respect to which the effect of such augmentations in particular has been established;
- the replacement of any attribute of a known item with another known attribute in order to achieve a technical result with respect to which the effect of such replacement in particular has been established;
- the exclusion of any attribute of a known item, the simultaneous exclusion of the function associated with the presence of this attribute, and the achievement of the result typical of such exclusion in this instance;

- an increase in the number of similar attributes of a known item in order to amplify the technical result associated with the presence in the item of such attributes in particular;
- the fabrication of a known item, or a part of it, from a known material in order to achieve the technical result associated with the known properties of the material, and;
- the creation of an item that includes known attributes, the selection of which and the relationship between which are based on known rules, and the technical result during which is only achievable in association with the known properties of this item 's attributes and the relationship between them.

Consequently, the claimed inventions satisfy the requirement of the "inventive level" patentability condition according to prevailing laws.

The following graphic materials illustrate the claimed inventions.
Fig. 1 - one possible alternative of the structural embodiment of the device (the detector) for the implementation of the claimed engineering solutions (the longitudinal section).
Fig. 2 - another possible alternative of the structural embodiment of the device (the detector) for the implementation of the claimed engineering solutions (the longitudinal section).

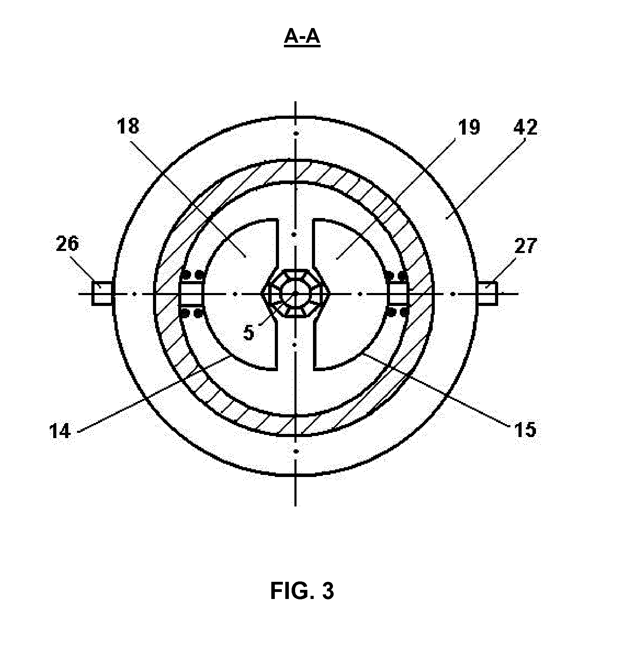

Fig. 3 - the A-A cross-section for Fig. 1 or Fig. 2.

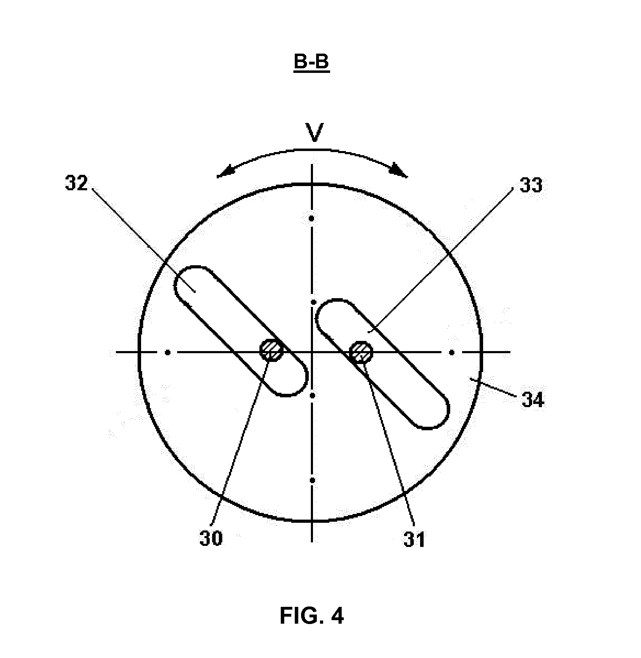

Fig. 4 - the B-B cross-section for Fig. 1 or Fig. 2.

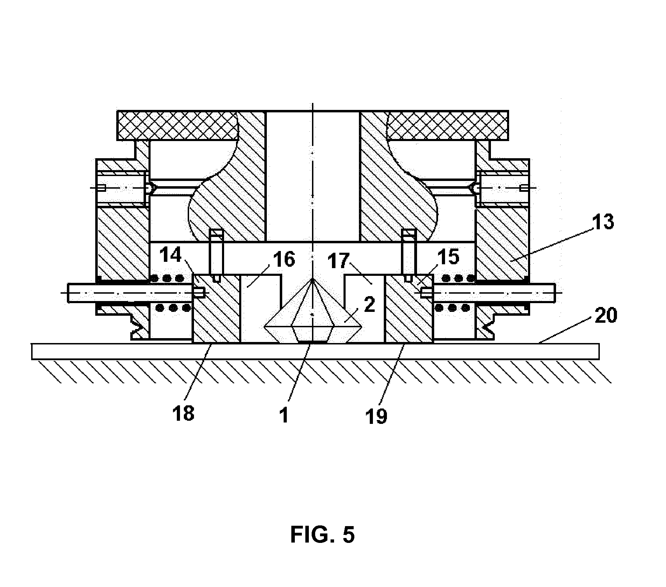

Fig. 5 - an illustration of the positioning process using a reference plane.

In the graphic materials, the following item numbers designate the subassemblies and components of the detector for implementing the claimed detection method.
1 - mark (identification);
2 - surface (of article 3, bearing identification mark 1);
3 - article (valuable, for example, a semiprecious or precious stone, in particular, a diamond);
4 - tool (positioning, for article 3);
5 - center (of the surface in question, 2, of article 3);
6 - axis (optical, of eyepiece 12);
8 - system (optical);
9 - beam (of light from source 10);
10 - source (of light, independent artificial);
11 - beam (of light, reflected from the surface of mark 1);
12 - eyepiece;
13 - casing (of the self-centering clamping device);
14 -jaw (movable spring-loaded, of the clamping device);
15 -jaw (movable spring-loaded, of the clamping device);
16 - surface (retaining, of jaw 14);
17 - surface (retaining, of jaw 15);
18 - surface (seating, of jaw 14);
19 - surface (seating, of jaw 15);
20 - plane (reference independent);
21 - detent (spring-loaded ball);
22 - detent (spring-loaded ball);
23 - groove (annular shaped, for detents 21 and 22);
24 - spring;
25 - spring;
26 - guide (of jaw 14);
27 - guide (of jaw 15);
28 - bushing (for the guide of jaw 14);
29 - bushing (for the guide of jaw 15);
30 - pin (driving, for jaw 14);
31 - pin (driving, for jaw 15);
32 - groove (guide, for pin 30);
33 - groove (guide, for pin 31);
34 - plug (of casing 13 of the self-centering clamping device);
35 - flange (of plug 34);
36 - opening (of plug 34);
37 - knurl (of flange 35);
38 - detent (ball, of plug 34);
39 - detent (ball, of plug 34);
40 - groove (annular shaped, for detents 38 and 39);
41 - plate (translucent), and;
42 - casing (of the optical system).

The claimed method for the detection of identification mark 1. which is invisible to the naked eye and is created on one of the flat surfaces (faces), 2, of a valuable article, 3, is realized in the following manner. First, the placement and immobilization of article 3 on positioning tool 4 is ensured, accompanied by the assurance that the center, 5, of the surface in question, 2 (the center of the mark image), of this article 3 lines up with the optical axis, 6, of the viewing tool, fashioned, for example, in the form of an eyepiece, 12, which is used for detection within the makeup of the optical system, 8. Positioning tool 4 is then secured in the axial direction relative to optical system 8. Thereafter, the backlighting of the surface in question, 2, of article 3 is arranged using a directed light beam, 9, from an independent emission source, 10. During the last step, the user views and observes mark 1 in the reflected light beams, 11, by means of adjusting the viewing tool [for example, a lens (omitted for clarity in the graphic materials) if a digital camera is used for observation, or eyepiece 12 if observation is performed by eye] of optical system 8. A self-centering clamping device with two reciprocally moving spring-loaded jaws, 14 and 15, that have retaining surfaces, 16 and 17, and with seating surfaces, 18 and 19, respectively, is used as positioning tool 4. Over the course of positioning, surface 2 of valuable article 3 bearing identification mark 1 is placed in the plane of seating surfaces 18 and 19 of jaws 14 and 15, respectively, of the clamping device. This can be accomplished by means of various process techniques, in particular, using an independent reference plane, 20. The distance from the center of the surface in question, 2, of article 3 to the focal point, F, of the viewing tool (for example, eyepiece 12) ensures a constant value (const) for a predetermined range of standard sizes of the articles undergoing detection, 3 (for example, cut precious stones, in particular - diamonds). To this end, the mutual spatial immobilization of positioning tool 4 and optical system 8 in the axial direction is always accomplished in the same spatial position, for which a specific user makes a one-time adjustment of the viewing tool, as exemplified by eyepiece 12, to match the optical parameters of his or her vision.

The claimed (simplest and most efficient) method for positioning valuable article 3 with identification mark 1 applied to one of its flat surfaces (faces), 2, over the course of its detection consists of the following. The article is placed and secured on positioning tool 4 so as to make it possible to ensure that center 5 of the surface in question (the center of the mark 1 image) of this article 3 lines up with optical axis 6 of the viewing tool (for example, eyepiece 12) that is used for detection within the makeup of optical system 8. Thereafter, the axial position of optical system 8 relative to positioning tool 4 is secured. Before placing and securing article 3 on positioning tool 4 (in the capacity of which a self-centering clamping device with two spring-loaded reciprocally moving jaws, 14 and 15, made with seating and retaining surfaces 18 and 19 and 16 and 17, respectively, is used), the surface of article 3 bearing identification mark 1 is lined up with independent reference plane 20. Seating surfaces 18 and 19 of jaws 14 and 15, respectively, of the clamping device in the separated position are then also brought into contact with the aforementioned reference plane 20 so as to ensure the capture the article undergoing detection, 3, by retaining surfaces 16 and 17 of jaws 14 and 15, respectively, and to accomplish its immobilization, resulting in the formation of contact areas in the locations where article 3 engages with retaining surfaces 16 and 17. The mutual spatial immobilization of positioning tool 4 (the clamping device) and optical system 8 in the axial direction is then accomplished in such a way that the distance from the center of the surface in question, 2, of article 3 to focal point F of the viewing tool (for example, eyepiece 12) constitutes a constant value (const) for a predetermined range of standard sizes of the articles undergoing detection, 3 (for example, cut precious stones, in particular - diamonds). To this end, the mutual spatial immobilization of positioning tool 4 (the clamping device) and optical system 8 in the axial direction is always accomplished in the same position, for example, by means of spring-loaded ball detents 21 and 22 (installed in casing 42 of optical system 8), which are located in shaped annular groove 23 (fashioned on the outer surface of casing 13 of the clamping device).

The practical implementation of the detection and positioning methods described above can be realized, for example, using the device (the detector) described below.

The detector for recording an identification mark that is invisible to the naked eye, 1, and is created on surface 2 of valuable item 3, includes the following subassemblies and components.

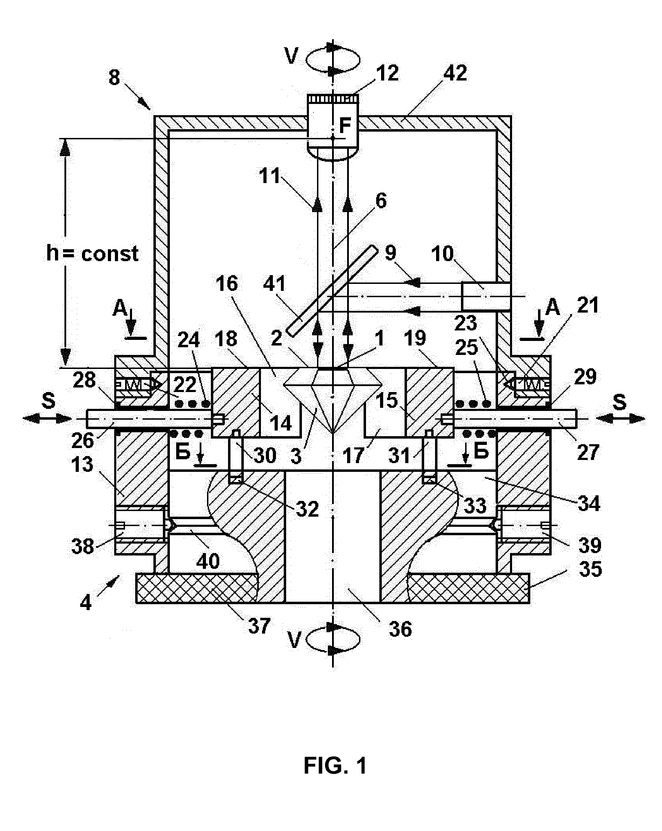

Positioning tool 4 and optical system 8, housed in casing 42, which are mutually secured in the axial direction. The optical system includes, at a minimum a viewing tool (for example, eyepiece 12) and a backlighting tool in the form of an independent direct emission source, 10. The viewing tool (for example, eyepiece 12) and source 10 are structurally and technologically arranged so as to ensure the possibility of backlighting surface 2 of article 3 in the area of identification mark 1, as well as its visual observation by the user through the viewing tool (for example, eyepiece 12) in the reflected light. Positioning tool 4 is fashioned in the form of a self-centering clamping device with two reciprocally moving spring-loaded jaws (for example, by means of springs 24 and 25), 14 and 15, which are installed in casing 13 of the clamping device by means of guides 26 and 27, housed in slide bushings 28 and 29, respectively, and prevented from turning, for example, by feather keys (omitted for clarity in the graphic materials). It is most advisable to install springs 24 and 25 so as to make it possible to ensure the regulation of their tension. Jaws 14 and 15 have one seating surface each, 18 and 19, and two retaining surfaces, 16 and 17, respectively. Retaining surfaces 16 and 17 are oriented along the longitudinal axis of the detector (which lines up with optical axis 6 of the viewing tool, in particular, eyepiece 12, in the design alternative shown in Fig. 1) at an angle to one another, resulting in the formation of a symmetrical groove with a triangular shape. Here, the axes of symmetry of the grooves of opposing jaws 14 and 15 lie in the same plane as the longitudinal axis of the detector. The geometric parameters of the aforementioned grooves are selected based on the condition of ensuring the possibility of the capture of article 3 along the perimeter of retaining surface 16 and 17 of jaws 14 and 15, resulting in the formation of contact areas. The mutual axial immobilization of casing 42 of optical system 8 and positioning tool 4 is arranged so as to make it possible to ensure the constancy of the distance value, **h**, from focal point F of the viewing tool to the aforementioned seating surfaces 18 and 19 of jaws 14 and 15 of the clamping device that spatially coincide with the plane of the position of the surface in question, 2, of article 3 of a predetermined range of standard sizes following their immobilization for detection. In this specific instance, the aforementioned mutual axial immobilization is accomplished by means of spring-loaded ball detents 21 and 22 (housed in casing 42 of optical system 8), which are located in shaped annular groove 23 (fashioned on the outer surface of casing 13 of the clamping device). This immobilization ensures the possibility of the reciprocal rotation (according to arrow V) of casing 42 of optical system 8 relative to casing 13 of positioning tool 4 (the clamping device), which makes it possible when viewing to orient the image of mark 1 (for example, an inscription) relative to the user's eye in the position needed for reading by means of the relative rotation of casings 42 and 13.

The separation of jaws 14 and 15 when positioning article 3 can be kinematically accomplished, for example, by means of a cam mechanism arranged in the form of driving pins 30 and 31, tightly connected to jaws 14 and 15, and housed in angular grooves 32 and 33 (the corresponding surfaces of which functionally constitute the cams), which are fashioned in plug 34 installed in casing 13 of the clamping device so as to make rotation possible (according to arrow V) and are secured in the axial direction by means of ball detents 38 and 39, which interact with the surfaces of shaped annular groove 40 fashioned on the outer surface of plug 34. In order to facilitate ease of rotation, plug 34 has flange 35 with knurl 37. This plug may also have a central through opening, 36, by means of which the possibility of the user visually observing the position of article 3 relative to retaining surfaces 16 and 17 of jaws 14 and 15 is ensured when positioning and securing article 3, which facilitates this process.

A black light-absorbing resilient coating, for example, made from teflon, silicone, or rubber, may be applied to retaining surfaces 16 and 17 of jaws 14 and 15 of the clamping device. This ensures the more reliable immobilization of article 3 and precludes the appearance of specks of light on the surface of article 3 as a result of the rereflection of the light beams [generated by source 10 and penetrating article 3 (a crystal)] from retaining surfaces 16 and 17 (that is to say, the contrast of the mark 1 image is increased when it is viewed).

According to one detector design alternative (Fig. 1), the viewing tool (in particular, eyepiece 12) is installed in such a way that its optical axis 6 lines up with the axis of symmetry of the detector, which is functionally also the axis of symmetry of the clamping device. In this instance, optical system 8 must have a translucent plate, 41, installed at an angle to the aforementioned optical axis 6, while the backlighting tool (source 10) must be spatially oriented so as to make the generation of light beam 9 possible, the axis of symmetry of which, following reflection from the aforementioned plate, lines up with optical axis 6 of the viewing tool (for example, eyepiece 12).

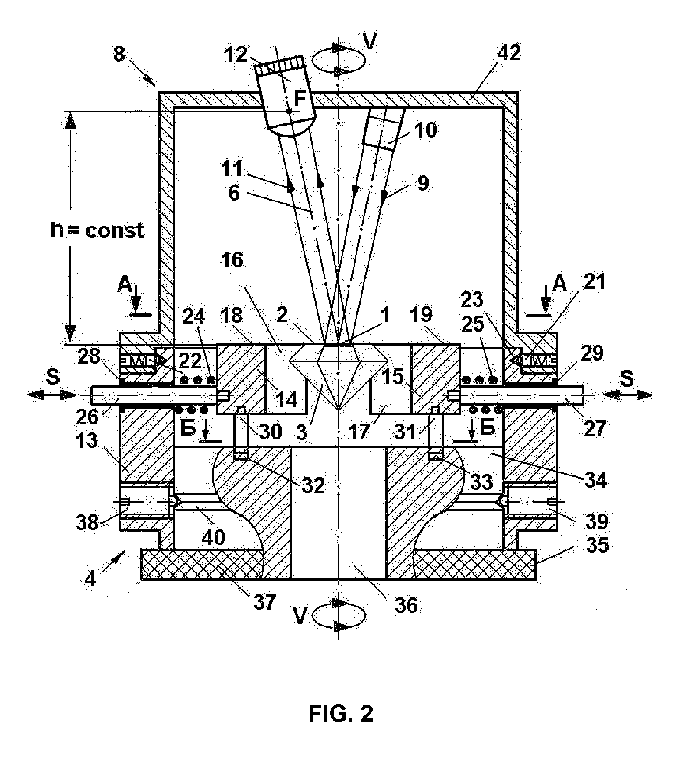

According to another detector design alternative (Fig. 2), the viewing tool (in particular, eyepiece 12) is installed in such a way that its optical axis 6 is located at a calculated angle to the axis of symmetry of the detector. In this instance, the backlighting tool (source 10) is spatially oriented so as to make the generation of light beam 9 possible, the axis of symmetry of which relative to the aforementioned axis of the detector is located in the same plane and at the same angle as optical axis 6 of the viewing tool (eyepiece 12), but mirror symmetrically. This alternative (when the aforementioned angles are correctly calculated) precludes the origination of specks of light on the surface in question, 2, of article 3 due to the total internal reflection effect in the crystal of article 3 during its backlighting, which increases the contrast of the mark 1 image during viewing.

The detector may have an independent plate, i.e., one that is not kinematically connected to the detector, with a reference plane, 20, which is functionally a tool for positioning seating surfaces 18 and 19 of jaws 14 and 15 in the same reference plane 20 as surface 2, to which mark 1 has been applied. The presence of this plate in the detector package makes it possible to perform the article 3 positioning procedure with a high degree of accuracy under nonstandard conditions, for example, when no natural horizontal plane, in particular - a table, is present near the user.

Thus, the claimed set of substantive attributes ensures the possibility of performing the positioning articles, 3, with different standard sizes [both with respect to the spatial position of the surface in question, 2, and with respect to the spatial position of the center, 5, of this surface 2 (center 5 of the mark image)] in the same position relative to focal point F of the viewing tool (in particular, eyepiece 12), which ensures the high quality (sharpness and contrast) of the mark 1 image when it is viewed for a predetermined range of standard sizes of the articles, 3, undergoing detection (governed by the geometric and technological parameters of the clamping device). In addition, the constancy of the value of the distance from focal point F of the viewing tool (eyepiece 12) to the center, 5, of the surface in question, 2 (the center of the mark 1 image), make it possible to preclude the readjustment of the viewing tool (for example, eyepiece 12) during the detection of articles, 3, with different standard sizes. That is to say, a specific individual user adjusts the optical parameters of the detector's viewing tool (for example, eyepiece 12) one time (during its first use) to match the optical parameters of his or her vision, which simplifies the detection process.

Therefore, the claimed engineering solutions can be extensively used in the area of the detection of identification marks created on the surfaces of valuable articles for the purpose of determining their authenticity and can be primarily used to determine the authenticity of articles made from semiprecious and precious stones, for example, diamonds.

The foregoing suggest the satisfaction of the following set of conditions when the claimed engineering solution is used:
- during their implementation, items that embody the claimed engineering solutions are intended for the detection of identification marks created on the surfaces of valuable articles for the purpose of determining the authenticity of these articles;
- for the claimed items in the form in which they are described in the independent claims below, the possibility of their implementation using the equipment and techniques described in the above application or those known from the prior art on the priority date has been confirmed, and;
- during their implementation, the items that embody the claimed engineering solution are capable of ensuring the achievement of the technical result specified by the applicant.

Consequently, the claimed item satisfies the requirement of the "industrial application" patentability condition according to prevailing laws.

## Claims

1. This method for detecting an identification mark that is invisible to the naked eye on the surface of a valuable article, according to which the following are carried out: placing and securing the article on the positioning tool so as to ensure that the center of this article's surface of interest lines up with the optical axis of the viewing tool that is used for detection within the makeup of the optical system; securing the positioning tool in the axial direction relative to the optical system; backlighting the article's surface of interest with a directed light beam from an independent emission source, and; user viewing and observation of the mark in the reflected light beams while adjusting the optical system's viewing tool, is distinctive in that a self-centering clamping device with two reciprocally moving jaws that have retaining and seating surfaces is used as the positioning tool; over the course of positioning, the valuable article surface bearing the identification mark is placed in the plane of the seating surfaces of the clamping device's jaws, and; in this instance, the distance from the center of the article's surface of interest to the focal point of the viewing tool ensures a constant value for a predetermined range of standard sizes of the articles undergoing detection, to which end the mutual spatial immobilization of the positioning tool and the optical system in the axial direction is accomplished in the same spatial position for which the adjustment of the viewing tool is also accomplished.

2. This method for positioning a valuable article bearing an identification mark over the course of its detection, which consists of placing and securing the article on the positioning tool in such as way as to ensure that the center of this article's surface of interest lines up with the optical axis of the viewing tool that is used for detection within the makeup of the optical system, after which the axial position of the optical system is fixed relative to the positioning tool, **is distinctive** in that before the article is placed and secured on the positioning tool, in the capacity of which a self-centering clamping device with two reciprocally moving jaws that have retaining and seating surfaces is used, the article surface bearing the identification mark is lined up with an independent reference plane; the seating surfaces of the clamping device's jaws in the separated position are then brought into contact with the aforementioned reference plane so as to ensure the capture of the article undergoing detection by the retaining surfaces of the jaws and to accomplish its immobilization, resulting in the formation of contact areas in the locations where the article engages with the retaining surfaces, after which the mutual spatial immobilization of the positioning tool and the optical system in the axial direction is accomplished in such a way that the distance from the article's surface in question to the focal point of the viewing tool constitutes a constant value for a predetermined range of standard sizes of the articles undergoing detection, to which end the mutual spatial immobilization of the positioning tool and the optical system in the axial direction is always accomplished in the same position.

3. This detector for recording an identification mark that is invisible to the naked eye on the surface of a valuable article, including a positioning tool and an optical system housed in a casing that are mutually secured in the axial direction, during which the optical system contains, at a minimum, a viewing tool and a backlighting tool in the form of an independent directed emission source, which are structurally and technologically arranged so as to ensure the possibility of article surface backlighting in the area of the identification mark and its visual observation by the user through the viewing tool in the reflected light, **is distinctive** in that the positioning tool is fashioned in the form of a self-centering clamping device with two reciprocally moving jaws, each of which has one seating surface and two retaining surfaces, the latter of which are oriented along the longitudinal axis of the detector at an angle to one another, resulting in the formation of a symmetrical groove with a triangular shape; the axes of symmetry of the grooves of the opposing jaws lie in the same plane as the longitudinal axis of the detector; the geometric parameters of the aforementioned grooves are selected based on the condition of the ensuring the possibility the article's capture along the perimeter of the retaining surfaces of the jaws, resulting in the formation of contact areas; here, the mutual axial immobilization of the optical system's casing and the positioning tool is arranged so as to make it possible to ensure the constancy of the distance value from the viewing tool's focal point to the aforementioned seating surfaces of the clamping device that spatially coincide with the plane of the position of the article surfaces in question of a predetermined range of standard sizes following their immobilization for detection.

4. The detector in paragraph 1 **is distinctive** in that a resilient, preferably light-absorbing coating, for example, from teflon, silicone, or rubber, is applied to the retaining surfaces of the clamping device's jaws.

5. The detector in paragraph 1 **is distinctive** in that the viewing tool is mounting in such a ways that its optical axis coincides with the axis of symmetry of the detector, which is functionally also the axis of symmetry of the clamping device, during which the optical system has a translucent plate that is installed at an angle to the aforementioned optical axis, while the backlighting tool is spatially oriented so as to make the generation of a light beam possible, the axis of symmetry of which, following reflection from the aforementioned plate, coincides with the optical axis of the viewing tool.

6. The detector in paragraph 1 **is distinctive** in that the viewing tool is mounted in such a way that its optical axis is located at a calculated angle to the axis of symmetry of the detector, which is functionally also the axis of symmetry of the clamping device, during which the backlighting tool is spatially oriented so as to make the generation of a light beam possible, the axis of symmetry of which relative to the aforementioned axis of the detector is located in the same plane and at the same angle as the optical axis of the viewing tool, but mirror symmetrically.

7. The detector in paragraph 1 **is distinctive** in that it has an independent plate, i.e., one that is not kinematically connected to the detector, with a reference plane that functionally constitutes a tool for positioning the seating surfaces of the jaws in the same reference plane as the article surface to which the identification mark has been applied.
